# EUROPÄISCHE PATENTANMELDUNG

(11) **EP 2 377 397 A1**
(43) Veröffentlichungstag der Anmeldung: **19.10.2011**
(21) Anmeldenummer: 10159882.9
(22) Anmeldetag: 14.04.2010
(51) Int. Cl.: A01N 37/50, A01N 43/40, A01N 43/56, A01N 43/653, A01N 43/88, A01N 45/02, A01P 3/00

(54) **Verwendung fungizider Wirkstoffe zur Kontrolle von Mykosen an Palmengewächsen**

(71) Anmelder: Bayer CropScience AG, 40789 Monheim (DE)
(72) Erfinder: Die Erfindernennung liegt noch nicht vor

(57) **Zusammenfassung**

Die vorliegende Erfindung betrifft die Verwendung von spezifischen fungiziden Wirkstoffen alleine oder in Kombination zur Kontrolle von Mykosen bei Palmengewächsen und ein Verfahren zur Anwendung dieser spezifischen fungiziden Wirkstoffe zur Kontrolle von besagten Mykosen im Bereich des Pflanzenschutzes und Materialschutzes.

## Beschreibung

Die vorliegende Erfindung betrifft die Verwendung von spezifischen fungiziden Wirkstoffen alleine oder in Kombination zur Kontrolle von Mykosen bei Palmengewächsen und ein Verfahren zur Anwendung dieser spezifischen fungiziden Wirkstoffe zur Kontrolle von besagten Mykosen im Bereich des Pflanzenschutzes und Materialschutzes.

Die Infektion von Palmen mit Pilzen kann durch Sporen, das Myzel oder die Pseudohyphen der phytopathogenen Pilze erfolgen. Häufig breitet sich der Pilz über das Wurzelsystem im Stamm aus (vgl. F.R. Sanderson, Mycopathologia (2005), 159; 139 bis 141), woher auch die Bezeichnung "Basal Stem Rot" (BSR) für die Krankheit stammt. Da diese Krankheit häufig durch Ganoderma borinense hervorgerufen wird. wird sie auch als "Ganoderma basal stem rot" bezeichnet. Eine weitere Möglichkeit des Infizierens ist durch luftübertragene Sporen gegeben. Die Erkrankung der Ölpalmen sind in Süd-Ost-Asien in der Ölpalmindustrie von großer ökonomischer Bedeutung und geht mit einem signifikanten Ertrags- und Bestandsverlust von bis 25 % innerhalb von 6 Jahren einher (vgl. J. Flood et al., Mycopathologia (2005) 159; 101 bis 107).

Fungizide Wirkstoffe, beispielsweise Triazole, Carboxamide, Strobilurine und deren Derivate, sind aus den Druckschrift DE 103 49 503 A, DE 197 16 257 A, WO 99/16314 A, WO 99/21853 A, WO 96/16048 A, WO 01/84931 A, WO 03/073850 A und WO 03/073852 A bekannt. Diese Wirkstoffe und deren Derivate werden zur Bekämpfung von phytopathogenen Pilzen, unter anderem auch aus der Abteilung Basidiomycetes, verwendet.

Die Anwendung der genannten Wirkstoffe bezieht sich jedoch auf Krankheiten von Getreidekulturen und Nichtgetreidekulturen, wie Wein, Obst, Erdnüsse und Gemüse. Eine Anwendung von Wirkstoffkombinationen bei Mykosen auf Palmgewächsen *(Arecaceae)* ist aus den zuvor erwähnten Druckschriften DE 103 49 503 A, DE 19 716 257 A, WO 99/16314 A, WO 99/21853 A, WO 96/16048 A, WO 01/84931 A, WO 03/073850 A und WO 03/073852 A nicht bekannt.

In der WO 2008/129060 A wird ein kombiniertes Verfahren aus einer fungiziden Behandlung und transgenen Manipulation von Feldfrüchten und Gemüsepflanzen im Allgemeinen zur Bekämpfung von Mykosen beschrieben. Dieses Verfahren zur Bekämpfung von Pilzkrankheiten, verursacht unter anderem durch Pilze der Abteilung Basidiomycetes, wird unter anderem auch für die Familie der Palmengewäche *(Arecaceae)* beschrieben. Eine transgene Manipulation von Pflanzen, die anschließend mit Fungiziden behandelt werden, kann dabei die Gefahr einer Resistenzbildung erniedrigen. In dieser Druckschrift werden verschiedene fungizide Wirkstoffe, beispielsweise Triazole und Carboxamide, in Verbindung mit einer transgenen Manipulation der zu behandelnden Pflanze verwendet. Es ist jedoch in dieser Druckschrift kein Hinweis zu finden, der auf eine Verwendung der fungiziden Wirkstoffe ohne transgene Manipulation bei Palmgewächsen *(Arecaceae)* hindeutet. Es wird stets eine transgene Manipulation der genannten Pflanzen vorausgesetzt.

In der US 2009/0069178 A ist ebenfalls eine Kombination aus einer Behandlung mit den fungiziden Wirkstoffen Prothioconazole und Silthiofam sowie der Anwendung von transgen Manipulationen beschrieben. Allerdings wird keine Verwendung bei Palmgewächsen *(Arecaceae)* im Allgemeinen oder der Ölpalme *Elaeis guineensis* im Speziellen erwähnt.

JP 2000217581 A und JP 2001321194 A offenbaren Oligonukleotide und ein Verfahren zur Detektion und Unterscheidung von Phytopathogenen der Gattung Ganoderma in Ölpalmen *Elaeis guineensis,* in welchem die Öligonukleotide Anwendung finden. Unter Verwendung dieses Verfahrens kann ein Befall von Ölpalmen mit *Ganoderma boninense* nachgewiesen werden. Allerdings ist in diesen Druckschriften kein Bezug zur fungiziden Bekämpfung der Phytopathogene der Gattung Ganoderma bei befallenen Ölpalmen enthalten.

Zusammenfassend ist festzuhalten, dass aus dem bisherigen Stand der Technik verschiedene fungizide Wirkstoffe in unterschiedlichen Kombinationen zur Bekämpfung von Phythopathogen bekannt sind. Diese werden hauptsächlichen bei Mykosen bei Getreidepflanzen oder Gemüsepflanzen sowie bei Obst im Feldanbau eingesetzt. Im vorstehend diskutierten Stand der Technik gibt es keine Hinweise zur erfolgreichen Bekämpfung von Mykosen auf Palmgewächsen, die speziell auf deren Schädlinge angepasst sind.

Die aus der Praxis bekannten mechanischen oder chemischen Methoden zur Bekämpfung der Pilzschädlinge bei Palmgewächsen sind bisher nicht zufriedenstellend. Auch ist die Wiederverkeimung von neu gepflanzten Palmgewächsen sehr hoch, da die Pilzschädlinge in verschiedenen Stadien Stresssituationen, beispielsweise Nährstoffmangel und Temperatureinflüsse, überdauern können.

Auch wurden bisher keine zufriedenstellenden Methoden gefunden, um fungalen Erkrankungen und Wiederverkeimungen basierend auf der "Basal Stem Rot" (BSR)-Krankheit zu bekämpfen. Diese Krankheit erfolgt in drei Phasen, nämlich der Fäulnis der Sämlinge und Jungpflanzen (1 bis 4 Jahre), der Fäulnis des unteren Stammes (basal stem rot: ab 6 Jahre aufwärts), und der Fäulnis der oberen Stamm-/Stielteile (upper stem rot: ab 12 Jahre aufwärts).

Die Fäulnis bei Palmen durch Pilze der Gattung Ganoderma ist die häufigste Erkrankung und hat gravierende Auswirkungen auf Ölpalmkulturen insbesondere in Indonesien und Malaysia. Ganze Plantagen können befallen sein, was erhebliche Einbussen bei der Ernte und langfristige Ausfälle durch das kontaminierte Anbauland mitführen kann. Die bisherige Vorgehensweise zur Bekämpfung ist nicht ausreichend, um diese Schädlinge zu bekämpfen.

Eine besondere Gefahr besteht dabei in der Wiederverkeimung neu gepflanzter Pflanzen in kontaminierten Böden, in denen innerhalb von wenigen Monten neu gepflanzte Pflanzen infiziert werden können. Das erste Anzeichen einer Infektion ist eine gelbe Verfärbung der jungen Triebe/Wedel. Infizierte Pflanzen entwickeln häufig keine Früchte und keine männlichen Blüten bis letztendlich Fäulnis am Stamm sowie unter der Rinde sichtbar wird. Allerdings erfolgt die Infektion nicht ausschließlich über die Wurzeln. Werden die Palmen in den ersten 3 bis 6 Jahren zugeschnitten, sind gerade diese Schnittstellen besonders anfällig für eine Infektion, da die Blattkrone nicht voll ausgebildet ist, Sporen von verschiedenen Quellen durch die Luft herangetragen werden und bevorzugt an den Schnittstellen die Pflanze infizieren. Die Infektion wird anhand von Pilzfruchtkörpern, die sich an solchen Schnittstellen bilden, sichtbar. In diesen Pilzfruchtkörpern sind Sporen enthalten. Besonders die auf dem Feld zurückgelassenen Schnittreste oder im Boden verbliebene Stammblöcke der Pflanzen bieten dem Pilz einen bevorzugten Nährboden, auf dem sich Pilzfruchtkörper bilden können und eine neue Infektionsquelle bilden. Durch Kolonisation durch Myzel sowie Pseudohyphen und Ausbreitung der Sporen breitet sich der Pilz aus und infiziert Jungpflanzen. Ein solcher Pilzfruchtkörper kann bis zu 40.000 Sporen pro Minute freisetzten, was eine enorme Infektionsgefahr für die umliegenden Pflanzen bedeutet.

Die bisher unzureichende Bekämpfung ist daher auf die unterschiedlichen Zustände wie z.B. das (melaninhaltige) Myzel, die Basidiosporen (Sporen) und Pseudohyphen des Pilzes zurückzuführen, durch die der Pilz extreme Bedingungen überdauern kann, um später unter besseren Bedingungen wieder aufkeimen zu können (vgl. Susanto et al., Mycopathologia (2005) 159; 149 bis 151). Es wurde gezeigt, dass auch dikaryotische Myzel die Pflanzen infizieren und Fäulnis hervorrufen können (vgl. Lim, H, P; Fong, Y, K, Mycopathologia (2005) 159; 179).

Es wurde auch an biologischen Bekämpfungsmaßnahmen geforscht (vgl. Susanto et al. Mxopathologia (2005) 159; 153 bis 157). Dazu wurden verschiedene Bakterien als Antagonisten getestet und festgestellt, dass insbesondere *Trichoderma harzianum, T. viride, Gliocladium viride, Pseudomonas fluorescens,* and *Bacillus sp.* im Treibhaus gegen Ganoderma boninense wirksam sind. Ölpalmen in Bereichen mit diesen Antagonisten waren geringer infiziert als Ölpalmen in unbehandelten Bereichen.

Idris et al beschreiben in MPOB TT No. 214, Juni 2004 (ISSN 1511-7871), dass Bromoconazol und Hexaconazol, im Vergleich zu Benomyl, Thiram, Triadimefon, Triadimenol und Tridemorph, besser zur Verlängerung der Ertragsdauer von mit *Ganoderma* infizierten Ölpalmen geeignet sind.

Nichtsdestotrotz sind die aus dem Stand der Technik bekannten Verfahren zur Bekämpfung des Befalls von Palmengewächsen mit *Ganoderma boninense* nicht zufriedenstellend, da sie entweder umständlich durchzuführen sind oder aber die Ergebnisse, die mit den Behandlungsmethoden erzielt werden, nicht ausreichen.

Aufgrund der Komplexität des Lebenszyklus phytopathogener Pilze und der variablen Infektionsweise in Abhängigkeit des Alters und Stadiums der Wirtspflanzen aus Palmengewächsen besteht daher großer Bedarf an effektiven Fungiziden, die gegen die verschiedenen Stadien der Pilze effektiv wirksam sind.

Die Aufgabe der vorliegenden Erfindung umfasst somit die Identifizierung geeigneter fungizider Wirkstoffe, deren Derivate und deren Kombinationen zur erfolgreichen Kontrolle von Mykosen, welche durch Pilze der Familie *Ganodermataceae* an Palmengewächsen hervorgerufen werden.

Es wurde nun gefunden, dass die Verwendung von einer oder mehreren fungiziden Verbindungen, ausgewählt aus der Gruppe, bestehend aus Succinat Dehydrogenase Inhibitoren, Triazolen, Strobilurinen, und Mischungen davon für eine erfolgreiche Kontrolle von Mykosen der Abteilung Basidiomycetes in Palmengewächsen geeignet sind.

Gegenstand der vorliegenden Erfindung ist somit die Verwendung von mindestens einem fungiziden Wirkstoff, ausgewählt aus der Gruppe, bestend aus Succinat Dehydrogenase Inhibitoren, Triazolen, Strobilurinen, Imidazolen, Benzotriazinen, , Pyrionethanil, zur Kontrolle von Mykosen der Abteilung Basidiomycetes, insbesondere der Familie *Ganodermataceae,* an Palmengewächsen.

In einer ersten besonderen Ausgestaltung der vorliegenden Erfindung wird der mindestens einefungizide Wirkstoff ausgewählt aus der Gruppe der Succinat Dehydrogenase Inhibitoren insbesondere aus Fluopyram, Isopyrazam, Boscalid, Penthiopyrad, Penflufen, Sedaxan, Fluxapyroxad, Bixafen und 3-Difluormethyl-1-methyl-1H-pyrazol-4-carbonsäure[2-(2,4-dichlorophenyl)-2-methoxy-1-methyl-ethyl]-amid. Im Rahmen dieser ersten Ausgestaltung ist insbesondere die Verwendung Bixafen und/oder Penflufen bevorzugt.

In einer zweiten besonderen Ausgestaltung der vorliegenden Erfindung wird der mindestens eine fungizide Wirkstoff ausgewählt aus der Gruppe der Triazole. Im Rahmen dieser zweiten Ausgestaltung ist insbesondere die Verwendung einer fungiziden Verbindung ausgewählt aus der Gruppe, bestehend aus Bitertanol, Fluquinconazol, Prothioconazole und Tebuconazol In einer dritten besonderen Ausgestaltung der vorliegenden Erfindung wird der mindestens eine fungizide Wirkstoff ausgewählt aus der Gruppe der Strobilurine. Im Rahmen dieser fünften Ausgestaltung ist insbesondere die Verwendung von Fluoxastrobin und Trifloxystrobin bevorzugt.

Im Rahmen der vorliegenden Erfindung ist insbesondere die Verwendung von mindestens einem fungiziden Wirkstoff, ausgewählt aus der Gruppe bestehend aus Prothioconazol, Fluquinconazole, Bitertanol, Tebuconazole, Penflufen, Bixafen, Fluoxastrobin und Trifloxystrobin bevorzugt.

Im Zusammenhang mit der vorliegenden Erfindung sind Succinat Dehydrogenase Inhibitoren alle Wirkstoffe, die eine inhibierende Wirkung auf das Enzym, Succinat Dehydrogenase, in der mitochondrialen Atmungskette besitzen. In einer bevorzugten Ausführungsform der vorliegenden Erfindung sind die Succinat Dehydrogenase Inhibitoren ausgewählt aus der Gruppe bestehend aus Fluopyram, Isopyrazam, Boscalid, Penthiopyrad, Penflufen, Sedaxan, Fluxapyroxad, Bixafen und 3-Difluormethyl-1-methyl-1H-pyrazol-4-carbonsäure[2-(2,4-dichlorophenyl)-2-methoxy-1-methyl-ethyl]-amid sowie aus Mischungen dieser Verbindungen. In einer besonders bevorzugten Ausführungsform der vorliegenden Erfindung ist der Succinat Dehydrogenase Inhibitor Bixafen oder Penflufen.

Bixafen mit dem chemischen Namen N-(3',4'-dichloro-5-fluoro-1,1'-biphenyl-2-yl)-3-(difluormethyl)-1-methyl-1H-pyrazol-4-carboxamid und geeignete Verfahren zu dessen Herstellung, sind ausgehend von kommerziell zugänglichen Ausgangsstoffen in WO 03/070705 beschrieben.

Penflufen mit dem chemischen Namen N-[2-(1,3-dimethylbutyl)phenyl]-5-fluor-1,3-dimethyl-1H-pyrazol-4-carboxamid und geeignete Verfahren zu dessen Herstellung, sind ausgehend von kommerziell zugänglichen Ausgangsstoffen in WO 03/010149 beschrieben.

Fluopyram mit dem chemischen Namen N-{[3-chlor-5-(trifluormethyl)-2-pyridinyl]ethyl}-2,6-dichlorbenzamid und geeignete Verfahren zu dessen Herstellung, sind ausgehend von kommerziell zugänglichen Ausgangsstoffen in EP-A- 1 389 614 beschrieben.

Sedaxan ist eine Mischung umfassend die beiden cis-Isomere des 2'-[(1RS,2RS)-1,1'-Bicycloprop-2-yl]-3-(difluoromethyl)-1-methylpyrazole-4-carboxanilid und die beiden trans-Isomere des 2'-[(1RS,2SR)-1,1'-Bicycloprop-2-yl]-3-(difluormethyl)-1-methylpyrazol-4-carboxanilid. Sedaxan und geeignete Verfahren zu dessen Herstellung, sind ausgehend von kommerziell zugänglichen Ausgangsstoffen in WO 03/074491, WO 2006/015865 und WO 2006/015866 beschrieben.

Isopyrazam ist eine Mischung umfassend die beiden syn-Isomere von 3-(Difluormethyl)-1-methyl-N-[(1RS,4SR,9RS)-1,2,3,4-tetrahydro-9-isopropyl-1,4-methanonaphthalen-5-yl]pyrazol-4-carboxamid und die beiden anti-Isomere von 3-(Difluormethyl)-1-methyl-N-[(1RS,4SR,9SR)-1,2,3,4-tetrahydro-9-isopropyl-1,4-methanonaphthalen-5-yl]pyrazol-4-carboxamid. Isopyrazam und geeignete Verfahren zu dessen Herstellung, sind ausgehend von kommerziell zugänglichen Ausgangsstoffen in WO 2004/035589 beschrieben.

Penthiopyrad mit dem chemischen Namen (RS)-N-[2-(1,3-dimethylbutyl)-3-thienyl]-1-methyl-3-(trifluoromethyl)pyrazole-4-carboxamide und geeignete Verfahren zu dessen Herstellung, sind ausgehend von kommerziell zugänglichen Ausgangsstoffen in EP-A-0 737 682 beschrieben.

Boscalid mit dem chemischen Namen 2-Chlor-N-(4'-chlorbiphenyl-2-yl)nicotinamid und geeignete Verfahren zu dessen Herstellung, sind ausgehend von kommerziell zugänglichen Ausgangsstoffen in DE-A 195 31 813 beschrieben.

Fluxapyroxad mit dem chemischen Namen 3-(difluormethyl)-1-methyl-N-(3',4',5'-trifluorbiphenyl-2-yl)-1H-pyrazol-4-carboxamid und geeignete Verfahren zu dessen Herstellung sind, ausgehend von kommerziell zugänglichen Ausgangsstoffen, in WO 2005/123690 beschrieben.

3-Difluormethyl-1-methyl-1H-pyrazol-4-carbonsäure[2-(2,4-dichlorophenyl)-2-methoxy-1-methyl-ethyl]-amid liegt üblicherweise als Gemisch von 4 Stereoisomeren vor. Geeignete Verfahren zu dessen Herstellung sind, ausgehend von kommerziell zugänglichen Ausgangsstoffen, in WO 2008/148570 beschrieben. Die Stereoisomere (+)-3-Difluormethyl-1-methyl-1H-pyrazol-4-carbonsäure[(1R,2S)-2-(2,4-dichlorophenyl)-2-methoxy-1-methyl-ethyl]-amid, (-)-3-Difluormethyl-1-methyl-1H-pyrazol-4-carbonsäure[(1S,2R)-2-(2,4-dichlorphenyl)-2-methoxy-1-methyl-ethyl]-amid; (-)-3-Difluormethyl-1-methyl-1H-pyrazol-4-carbonsäure[(1R,2R)-2-(2,4-Dichlorophenyl)-2-methoxy-1-methyl-ethyl]-amid und (+)-3-Difluoromethyl-1-methyl-1H-pyrazol- 4-carbonsäure[(1S,2S)-2-(2,4-dichlorphenyl)-2-methoxy-1-methyl-ethyl]-amid können, beispielsweise durch HPLC, unter Verwendung einer chiralen Stationärphase, wie in WO 2010/000612 beschrieben, voneinander getrennt werden.

Die erfindungsgemäß zu verwendeten Fungizide sind als agrochemische Wirkstoffe bereits bekannt (vgl. z.B. Pesticide Manual, 15. Auflage, November 2009).

Die Verwendung der genannten Fungizide zur Kontrolle von Mykosen der Abteilung *Basidiomycetes* von Palmengewächsen weist gegenüber den aus dem Stand der Technik bekannten Stoffen bzw. Behandlungsmethoden folgende Vorteile auf: Erfindungsgemäß wird eine gute Wirksamkeit erreicht, die erfindungsgemäß vorgesehenen Wirkstoffe haben gute öko- und sonstige toxikologische Eigenschaften und zeigen keine unakzeptablen Auswirkungen auf die unmittelbare Umgebung der Palmenkulturen.

Im Rahmen der vorliegenden Erfindung kann es sich bei den Mykosen, die im Rahmen der vorliegenden Erfindung kontrolliert werden, auch um Sekundärinfektionen handeln, d.h., dass vor den Mykosen bereits andere Krankheiten die Palmenkultur befallen hatten.

Die erfindungsgemäß vorgesehenen Wirkstoffe können in üblichen Formulierungen verwendet werden. So kann die Wirkstoffzusammensetzung beispielsweise in Form einer Suspension, Emulsion, Lösung, Pulver, Schaum, Paste, in Form von Granulate bzw. Feinstpartikel, als Aerosole oder Feinstverkapselungen verwendet werden.

Die erfindungsgemäß vorgesehene Verwendung der fungiziden Wirkstoffe erfolgt vorzugsweise mit einer Dosierung zwischen 0,01 und 5 kg/ha besonders bevorzugt zwischen 0,1 und 3 kg/ha, insbesondere bevorzugt zwischen 0,5 und 2 kg/ha.

Die erfindungsgemäß vorgesehenen fungiziden Wirkstoffe eignen sich insbesondere zur Kontrolle von Pilzerkrankungen, die sich über das Wurzelsystem der Palme ausbreiten. Insbesondere eignen sich die erfindungsgemäß vorgesehenen Wirkstoffe zur Bekämpfung der Basal Stern Rot-Krankheit.

Darüber hinaus bietet die erfindungsgemäße Verwendung auch allgemein Schutz vor Pilzerkrankungen, die durch Sporen, insbesondere luftübertragenen Sporen, das Myzel oder die Pseudohypen übertragen werden.

Die erfindungsgemäße Verwendung eignet sich darüber hinaus auch zum Schutz vor der Wiederverkennung von Palmengewächsen, die zwischenzeitlich keimfrei sind. Insoweit kann die erfindungsgemäße Verwendung sowohl therapeutisch als auch präventiv erfolgen. Auch ist durch die vorliegende Erfindung ein wirkungsvoller Schutz vor Infektion nach einem Zuschnitt der Palme möglich; dieses gilt insbesondere für etwaige Infektionen über die Schnittfläche.

Besonders bevorzugt werden erfindungsgemäß Palmenpflanzen der jeweils handelsüblichen oder in Gebrauch befindlichen Palmensorten behandelt. Unter Palmensorten versteht man jedoch auch Palmenpflanzen mit neuen Eigenschaften ("Traits"), die sowohl durch konventionelle Züchtung, durch Mutagenese oder mit Hilfe rekombinanter DNA-Techniken gezüchtet worden sind. Im Rahmen der vorliegenden Erfindung können auch Palmenpflanzen behandelt werden, die durch konventionelle Züchtungs- und Optimierungsmethoden oder durch biotechnologische und gentechnologische Methoden oder Kombinationen dieser Methoden erhalten werden können, einschließlich der transgenen Palmenpflanzen und einschließlich der durch Sortenschutzrechte schützbaren oder nicht schützbaren Palmenpflanzen.

Im Rahmen der vorliegenden Erfindung können auch genetisch modifizierten Organismen (GMOs) behandelt werden. Genetisch modifizierte Palmenpflanzen (oder transgene Palmenpflanzen) sind Pflanzen, bei denen ein heterologes Gen stabil in das Genom integriert worden ist. Der Begriff "heterologes Gen" bedeutet im wesentlichen ein Gen, das außerhalb der Palmenpflanzen bereitgestellt oder assembliert wird und das bei Einführung in das Zellkerngenom, das Chloroplastengenom oder das Hypochondriengenom der transformierten Pflanze dadurch neue oder verbesserte agronomische oder sonstige Eigenschaften verleiht, dass es ein interessierendes Protein oder Polypeptid exprimiert oder dass es ein anderes Gen, das in der Pflanze vorliegt bzw. andere Gene, die in der Pflanze vorliegen, herunter reguliert oder abschaltet (zum Beispiel mittels Antisense-Technologie, Cosuppressionstechnologie oder RNAi-Technologie [RNA Interference]). Ein heterologes Gen, das im Genom vorliegt, wird ebenfalls als Transgen bezeichnet. Ein Transgen, das durch sein spezifisches Vorliegen im Pflanzengenom definiert ist, wird als Transformations- bzw. transgenes Event bezeichnet.

Zu Palmenpflanzen und Palmenpflanzensorten, die vorzugsweise erfindungsgemäß behandelt werden, zählen alle Palmenpflanzen, die über Erbgut verfügen, das diesen Palmenpflanzen besonders vorteilhafte, nützliche Merkmale verleiht (egal, ob dies durch Züchtung und/oder Biotechnologie erzielt wurde).

Palmenpflanzen und Palmenpflanzensorten, die ebenfalls erfindungsgemäß behandelt werden können, sind solche Palmenpflanzen, die gegen einen oder mehrere abiotische Stressfaktoren resistent sind. Zu den abiotischen Stressbedingungen können zum Beispiel Dürre, Kälte- und Hitzebedingungen, osmotischer Stress, Staunässe, erhöhter Bodensalzgehalt, erhöhtes Ausgesetztsein an Mineralien, Ozonbedingungen, Starklichtbedingungen, beschränkte Verfügbarkeit von Stickstoffnährstoffen, beschränkte Verfügbarkeit von Phosphornährstoffen oder Vermeidung von Schatten zählen.

Palmenpflanzen und Palmenpflanzensorten, die ebenfalls erfindungsgemäß behandelt werden können, sind solche Palmenpflanzen, die durch erhöhte Ertragseigenschaften gekennzeichnet sind. Ein erhöhter Ertrag kann bei diesen Palmenpflanzen z. B. auf verbesserter Pflanzenphysiologie, verbessertem Pflanzenwuchs und verbesserter Pflanzenentwicklung, wie Wasserverwertungseffizienz, Wasserhalteeffizienz, verbesserter Stickstoffverwertung, erhöhter Kohlenstoffassimilation, verbesserter Photosynthese, verstärkter Keimkraft und veränderter Abreife beruhen. Der Ertrag kann weiterhin durch eine verbesserte Pflanzenarchitektur (unter Stress- und nicht-Stress-Bedingungen) beeinflusst werden, darunter frühe Blüte, Kontrolle der Blüte für die Produktion von Hybridsaatgut, Keimpflanzenwüchsigkeit, Pflanzengröße, Internodienzahl und - abstand, Wurzelwachstum, Samengröße, Fruchtgröße, Schotengröße, Schoten- oder Ährenzahl, Anzahl der Samen pro Schote oder Ähre, Samenmasse, verstärkte Samenfüllung, verringerter Samenausfall, verringertes Schotenplatzen sowie Standfestigkeit. Zu weiteren Ertragsmerkmalen zählen Samenzusammensetzung wie Kohlenhydratgehalt, Proteingehalt, Ölgehalt und Ölzusammensetzung, Nährwert, Verringerung der nährwidrigen Verbindungen, verbesserte Verarbeitbarkeit und verbesserte Lagerfähigkeit.

Palmenpflanzen, die erfindungsgemäß ebenfalls behandelt werden können, sind Hybridpflanzen, die bereits die Eigenschaften der Heterosis bzw. des Hybrideffekts exprimieren, was im allgemeinen zu höherem Ertrag, höherer Wüchsigkeit, besserer Gesundheit und besserer Resistenz gegen biotische und abiotische Streßfaktoren führt. Solche Pflanzen werden typischerweise dadurch erzeugt, dass man eine ingezüchtete pollensterile Elternlinie (den weiblichen Kreuzungspartner) mit einer anderen ingezüchteten pollenfertilen Elternlinie (dem männlichen Kreuzungspartner) kreuzt. Das Hybridsaatgut wird typischerweise von den pollensterilen Pflanzen geerntet und an Vermehrer verkauft. Pollensterile Pflanzen können manchmal (z. B. beim Mais) durch Entfahnen (d. h. mechanischem Entfernen der männlichen Geschlechtsorgane bzw. der männlichen Blüten), produziert werden; es ist jedoch üblicher, dass die Pollensterilität auf genetischen Determinanten im Pflanzengenom beruht. In diesem Fall, insbesondere dann, wenn es sich bei dem gewünschten Produkt, da man von den Hybridpflanzen ernten will, um die Samen handelt, ist es üblicherweise günstig, sicherzustellen, dass die Pollenfertilität in Hybridpflanzen, die die für die Pollensterilität verantwortlichen genetischen Determinanten enthalten, völlig restoriert wird. Dies kann erreicht werden, indem sichergestellt wird, dass die männlichen Kreuzungspartner entsprechende Fertilitätsrestorergene besitzen, die in der Lage sind, die Pollenfertilität in Hybridpflanzen, die die genetischen Determinanten, die für die Pollensterilität verantwortlich sind, enthalten, zu restorieren. Genetische Determinanten für Pollensterilität können im Cytoplasma lokalisiert sein. Beispiele für cytoplasmatische Pollensterilität (CMS) wurden zum Beispiel für Brassica-Arten beschrieben (WO 1992/005251, WO 1995/009910, WO 1998/27806, WO 2005/002324, WO 2006/021972 und US 6,229,072). Genetische Determinanten für Pollensterilität können jedoch auch im Zellkerngenom lokalisiert sein. Pollensterile Pflanzen können auch mit Methoden der pflanzlichen Biotechnologie, wie Gentechnik, erhalten werden. Ein besonders günstiges Mittel zur Erzeugung von pollensterilen Pflanzen ist in WO 89/10396 beschrieben, wobei zum Beispiel eine Ribonuklease wie eine Barnase selektiv in den Tapetumzellen in den Staubblättern exprimiert wird. Die Fertilität kann dann durch Expression eines Ribonukleasehemmers wie Barstar in den Tapetumzellen restoriert werden (z. B. WO 1991/002069).

Im Rahmen der vorliegenden Erfindung kann der fungizide Wirkstoff in seinen handelsüblichen Formulierungen sowie in den aus diesen Formulierungen bereiteten Anwendungsformen in Mischung mit anderen Wirkstoffen wie Insektiziden, Lockstoffen, Sterilantien, Bakteriziden, Akariziden, Nematiziden, weiteren Fungiziden, wachstumsregulierenden Stoffen, Herbiziden, Safenern und/oder Düngemitteln vorliegen.

Der erfindungsgemäß zu verwendende Wirkstoff kann dabei in üblichen Formulierungen verwendet werden, wie Lösungen, Emulsionen, Spritzpulver, wasser- und ölbasierte Suspensionen und Suspensions-Emulsions-Konzentrate.

Im Rahmen der vorliegenden Erfindung ist es insbesondere bevorzugt, wenn der erfindungsgemäß vorgesehene Wirkstoff in der Form einer Sprühformulierung verwendet wird.

Entsprechende Formulierungen und deren Bestandteile sind dem Fachmann an sich bekannt.

Des Weiteren betrifft die vorliegende Erfindung ein Verfahren zur Anwendung der zuvor beschriebenen spezifischen fungiziden Wirkstoffe zur Kontrolle der besagten Mykosen im Bereich des Pflanzenschutzes und Materialschutzes.

Das erfindungsgemäße Verfahren ist insbesondere dadurch gekennzeichnet, dass die Kontrolle von Mykosen präventiv und/oder therapeutisch erfolgen kann.

Das erfindungsgemäße Verfahren ist ferner insbesondere dadurch gekennzeichnet, dass man einen oder mehrere der zuvor bezeichneten fungiziden Wirkstoffe auf Palmengewächse), ihre oberirdischen und/oder unterirdischen Bestandteile, deren Lebensraum und/oder Lagerraum und/oder Erntegut ausbringt.

Unter Bestandteile von Pflanzen bzw. Palmgewächsen sind oberirdische und unterirdische Pflanzenteile zu verstehen. Unterirdische Pflanzenteile sind Wurzel, Rhizome, Knollen, Stecklinge, Ableger, Samen, Saatgut und Boden und zu den oberirdische Pflanzenteilen gehören Stamm, Rinde, Spross, Blatt, Blüte, Früchte, Fruchtkörper, Stengel, Nadeln, Stamm, Äste. Des Weiteren kann die erfindungsgemäße Wirkstoffzusammensetzung ebenfalls auf das Erntegut, dem vegetativen und generativen Vermehrungsmaterial aufgebracht werden.

Die Art der Verwendung ist variabel und kann durch direkte oder indirekte Anwendung an der Pflanze, der Umgebung, dem Lebensraum und/oder dem Lagerraum erfolgen. Mögliche Applikationen sind zum Beispiel als Blattapplikation, Beizmittel, Sprühen, Schleudern, Giesen, Beimischen, Streuen, Vernebeln, Streichen, Verdampfen, Tauchen, Aufstreichen, Umhüllen bzw. Be- oder Überschichten von Pflanzenteilen denkbar. Auch eine Druck-Infektion in entsprechende Palmengewächse ist möglich. (besonders bevorzugt wären "soil drenching" und "trunk injection")

Zum Beispiel kann die Wirkstoffzusammensetzung in oder unter die Rinde injiziert werden, um die Pflanze herum auf den Boden (Erdreich, Sand-, Kies-, Gestein-, Lehm- oder Mischboden) gegossen oder aufgesprüht werden. Eine weitere Anwendungsform ist das Aufsprühen auf die Pflanze und ihre Pflanzenteile. In trockener Form kann die Wirkstoffzusammensetzung dem Bodenmaterial (Erdreich, Sand-, Kies-, Gestein-, Lehm- oder Mischboden) und/oder den Samen beigemischt werden. Sowohl in trockener wie auch flüssiger Form kann die erfindungsgemäße Wirkstoffzusammensetzung dem Bewässerungssystem zugeführt werden. Die Anwendungsform kann individuell an die örtlichen Gegebenheiten und Anforderungen angepasst werden.

Für weitere Beschreibungen des erfindungsgemäßen Verfahrens wird auch oben verwiesen.

Die vorliegende Erfindung eignet sich zur Behandlung beliebiger Palmenkulturen. Insbesondere geeignete Palmenkulturen sind Palmen
(1) der Unterfamilie Calamoideae:
   - Tribus Eugeissoneae
      o Eugeissona
   - Tribus Lepidocaryeae
      ■ Subtribus Ancistrophyllinae (Oncocalamus, Eremospatha und Laccosperma)
      ■ Subtribus Raphiinae (Raphia)
      ■ Subtribus Mauritiinae (Lepidocaryum, Mauritia und Mauritiella)
   - Tribus Calameae
      ■ Subtribus Korthalsiinae (Korthalsia)
      ■ Subtribus Salaccinae (Eleiodoxa und Salacca)
      ■ Subtribus Metroxylinae (Metroxylon)
      ■ Subtribus Pigafettinae (Pigafetta)
      ■ Subtribus Plectocomiinae (Plectocomia, Myrialepis und Plectocomiopsis)
      ■ Subtribus Calaminae (Rotangpalmen (Calamus), Retispatha, Daemonorops, Ceratolobus und Pogonotium)
(2) der Unterfamilie Nypoideae (Nipapalme (Nypa))
(3) der Unterfamilie Coryphoideae
   - Tribus Sabaleae (Sabal)
   - Tribus Cryosophileae (Schippia, Trithrinax, Zombia, Coccothrinax, Hemithrinax, Leucothrinax, Thrinax, Chelyocarpus, Cryosophila und Itaya)
   - Tribus Phoeniceae (Dattelpalmen (Phoenix))
   - Tribus Trachycarpeae
      ■ Subtribus Rhapidinae (Chamaerops, Guihaia, Hanfpalmen (Trachycarpus), Rhapidophyllum, Maxburretia und Rhapis)
      ■ Subtribus Livistoninae (Livistona, Strahlenpalmen (Licuala), Johannesteijsmannia, Pholidocarpus und Pritchardiopsis)
      ■ incertae sedis Trachycarpeae (Acoelorrhaphe, Serenoa, Brahea, Colpothrinax, Copernicia, Pritchardia und Washingtonia)
   - Tribus Chuniophoeniceae (Chuniophoenix, Kerriodoxa, Nannorrhops und Tahina)
   - Tribus Caryoteae (Caryota, Arenga und Wallichia)
   - Tribus Corypheae (Corypha)
   - Tribus Borasseae
      ■ Subtribus Hyphaeninae (Bismarckia, Satranala, Doumpalmen (Hyphaene) und Medemia)
      ■ Subtribus Lataniinae (Latania, Lodoicea, Borassodendron und Borassus)
(4) der Unterfamilie Ceroxyloideae
   - Tribus Cyclospatheae (Pseudophoenix)
   - Tribus Ceroxyleae (Ceroxylon, Juania, Oraniopsis und Ravenea)
   - Tribus Phytelepheae (Ammandra, Aphandra und Steinnusspalmen (Phytelephas))
(5) der Unterfamilie Arecoideae
   - Tribus Iriarteeae (Iriartella, Dictyocaryum, Iriartea, Socratea und Wettinia)
   - Tribus Chamaedoreeae (Hyophorbe, Wendlandiella, Synechanthus, Bergpalmen (Chamaedorea) und Gaussia)
   - Tribus Podococceae (Podococcus)
   - Tribus Oranieae (Orania)
   - Tribus Sclerospermeae (Sclerosperma)
   - Tribus Roystoneae (Roystonea)
   - Tribus Reinhardtieae (Reinhardtia)
   - Tribus Cocoseae
      ■ Subtribus Attaleinae (Beccariophoenix, Jubaeopsis, Voanioala, Allagoptera, Attalea, Geleepalmen (Butia), Kokospalme (Cocos), Honigpalme (Jubaea), Lytocaryum, Syagrus und Parajubaea)
      ■ Subtribus Bactridinae (Acrocomia, Astrocaryum, Stachelpalmen (Aiphanes),Bactris und Desmoncus)
      ■ Subtribus Elaeidinae (Barcella, Ölpalmen (Elaeis))
   - Tribus Manicarieae (Manicaria)
   - Tribus Euterpeae (Hyospathe, Euterpe, Prestoea, Neonicholsonia und Oenocarpus)
   - Tribus Geonomateae (Welfia, Pholidostachys, Calyptrogyne, Calyptronoma, Asterogyne und Geonoma)
   - Tribus Leopoldinieae (Leopoldinia)
   - Tribus Pelagodoxeae (Pelagodoxa und Sommieria)
   - Tribus Areceae
      ■ Subtribus Archontophoenicinae (Actinorhytis, Archontophoenix, Actinokentia, Chambeyronia und Kentiopsis)
      ■ Subtribus Arecinae (Betelpalmen (Areca)), Nenga und Pinanga)
      ■ Subtribus Basseliniinae (Basselinia, Burretiokentia, Cyphophoenix, Cyphosperma, Lepidorrhachis und Physokentia)
      ■ Subtribus Carpoxylinae (Carpoxylon, Satakentia und Neoveitchia)
      ■ Subtribus Clinospermatinae (Cyphokentia und Clinosperma)
      ■ Subtribus Dypsidinae (Dypsis, Lemurophoenix, Marojejya und Masoala)
      ■ Subtribus Linospadicinae (Calyptrocalyx, Linospadix, Howea und Laccospadix)
      ■ Subtribus Oncospermatinae (Oncosperma, Deckenia, Acanthophoenix und Tectiphiala)
      ■ Subtribus Ptychospermatinae (Ptychosperma, Ponapea, Adonidia, Solfia, Balaka, Veitchia, Carpentaria, Wodyetia, Drymophloeus, Normanbya, Brassiophoenix und Ptychococcus)
      ■ Subtribus Rhopalostylidinae (Rhopalostylis und Hedyscepe)
      ■ Subtribus Verschaffeltiinae (Nephrosperma, Phoenicophorium, Roscheria und Verschaffeltia)
(6) Incertae sedis Areceae (Bentinckia, Clinostigma, Cyrtostachys, Dictyosperma, Dransfieldia, Heterospathe, Hydriastele, Iguanura, Loxococcus und Rhopaloblaste)

In einer besonders bevorzugten Ausgestaltung der vorliegenden Erfindung dient die vorliegend beschriebene Kontrolle der Behandlung von Palmengewächsen der Unterfamilie der Arecoideae, weiter bevorzugt des Tribus Cocosea, noch weitere bevorzugt des Subtribus Elaeidinae. Insbesondere wird im Rahmen der vorliegenden Erfindung die Kontrolle von Mykosen an Ölpalmen (Elaeis) durchgeführt.

Die vorliegende Erfindung wird anhand der nachfolgenden Beispiele näher erläutert.

### Beispiele:

### Beispiel 1:

### I. Verfahrensbeschreibung

1. Kultivierung der Isolate auf Kartoffel-Dextrose-Agar (PDA)
2. Zubereitung einer flüssigen Kartoffel-Dextrose-Bouillon (PDB) als Beimpfmedium
   Für die Myzelbildung wurden 10 kleine Stücke des Myzels in 200 ml der flüssigen Kartoffel-Dextrose-Bouillon (PDB) überführt und in einer Gewächshauskammer bei 26 °C für 7 Tage kultiviert.
   Das Myzel wurde isoliert, in 200 ml frischer flüssigen Kartoffel-Dextrose-Bouillon mit 25 mg/l Enrofloxacin überführt und mittels eines Homogenisators (5 Sekunden, Ultra Turrax) zerkleinert. Anschließend wurde diese Myzel-Suspension auf zwei Myzel-Dichten eingestellt:
   **Beimpfmedium A; "Hohe Dichte des Myzels"**
   homogenisierte Myzel-Suspension auf 400 ml mit PDB + Enrofloxacin aufgefüllt
   **Beimpfmedium B; "Geringe Dichte des Myzels"**
      100 ml des Beimpfmediums A auf 400 ml mit PDB + Enrofloxacin aufgefüllt
3. Mikrotiter-Platten-Test:
   Konzentrationsbereich von 0,0 - 0,0064 - 0,032 - 0,16 - 4 - 20 bis 100 ppm für jedes Fungizid (aktiver Bestandteil)
   Fungizid und Beimpfmedium wurden mit einem automatischen Dispenser verteilt
4. Auswertung (Bestimmung des Wachstums):
   Erfolgt alle 2 Tage (1. Auswertung nach 4 Tagen) durch Messung der Absorption mittels eines Photometers über 13 Tage.

### II. Ergebnisse

EC₅₀ & (MEC₅₀): Fungizidkonzentration bei der das Pilzwachstum um 50 % reduziert ist:

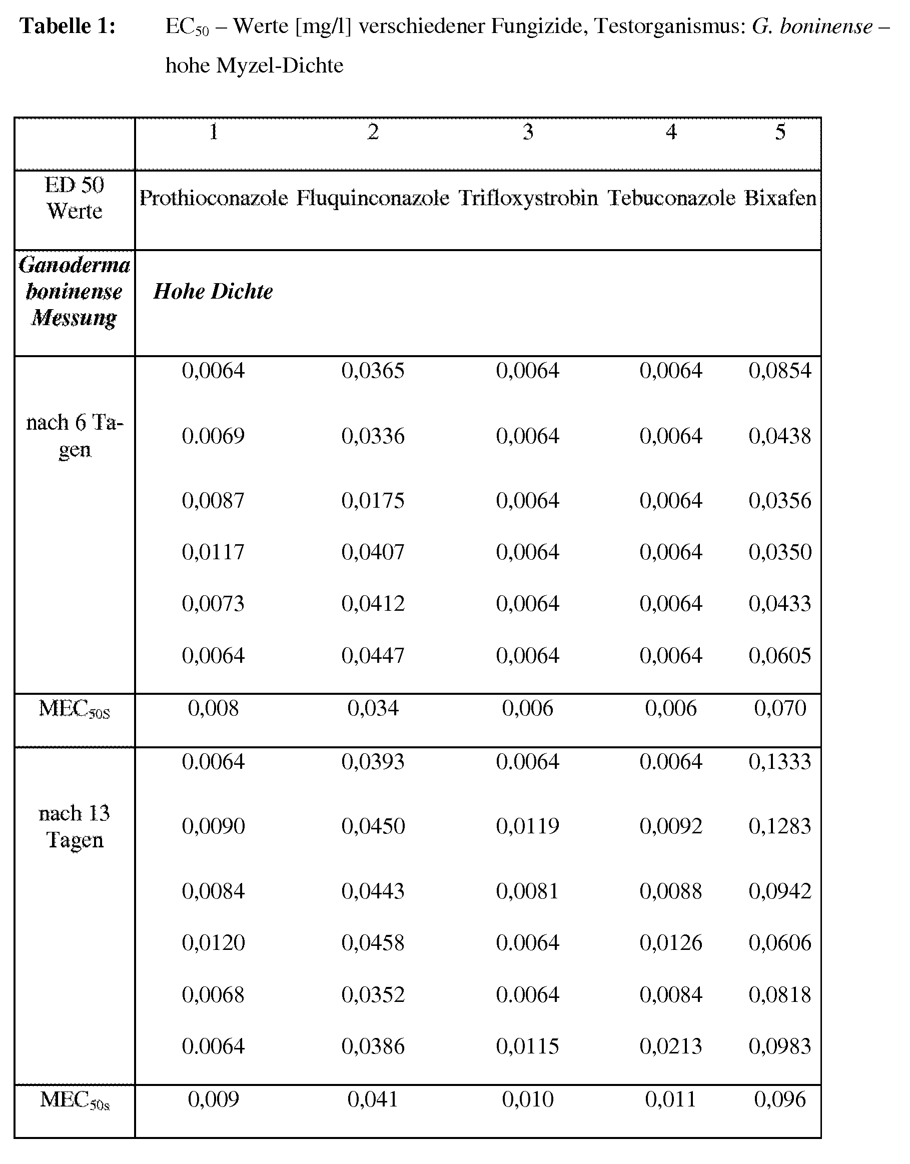

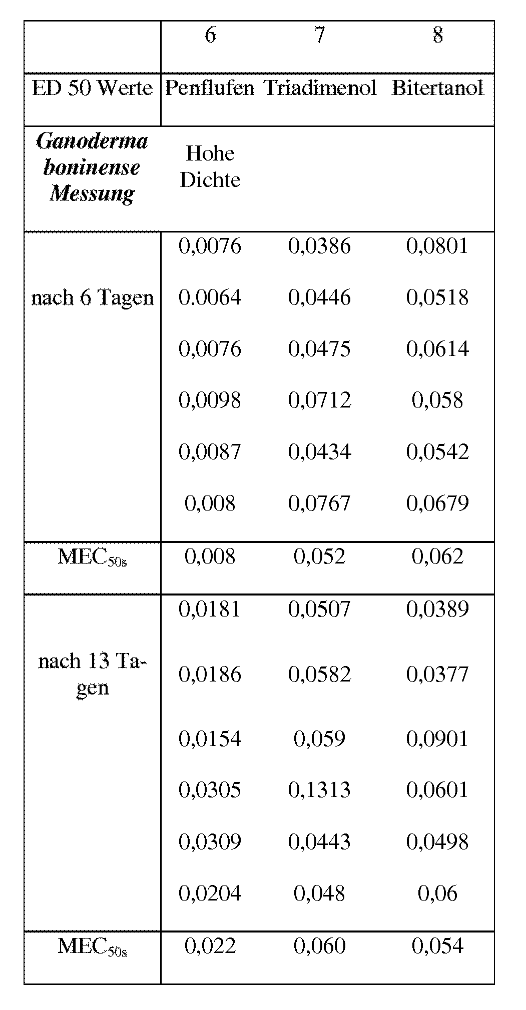

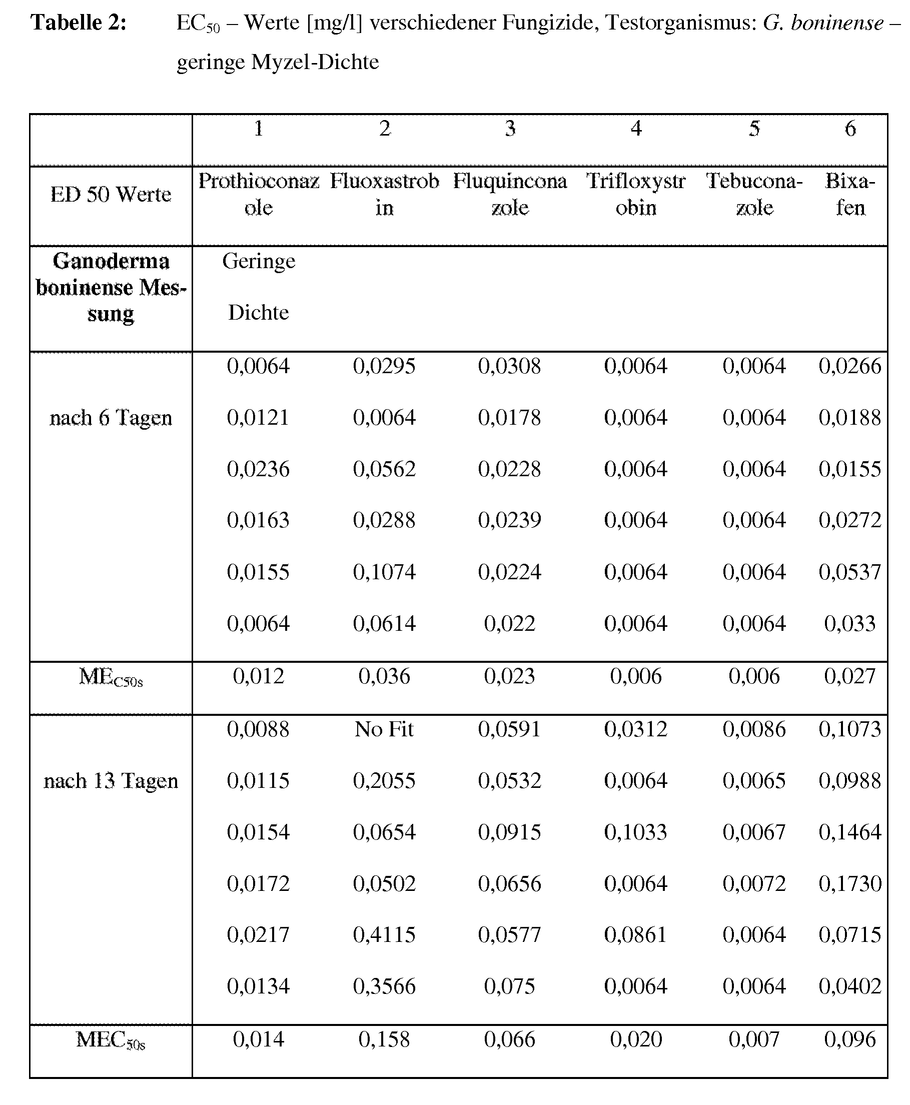

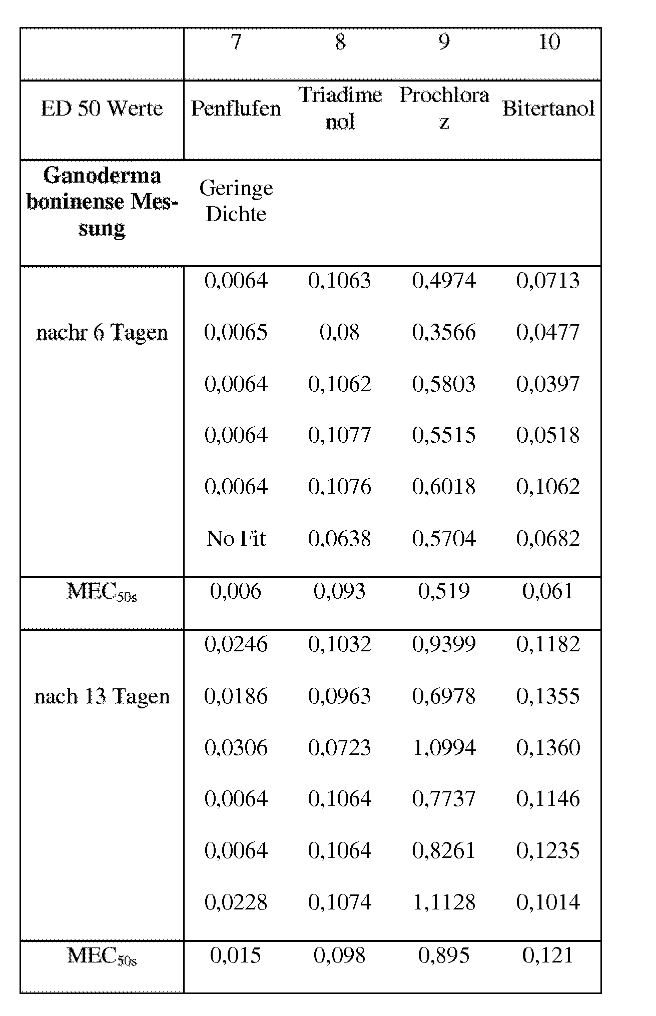

Die Basal Stem Rot (BSR) Krankheit zeigt eine unterschiedliche Sensitivität im Hinblick auf die getesteten Komponenten.

Wie anhand des EC₅₀-Wertes gezeigt (MEC₅₀ₛ in Tabellen 1 und 2), war das Wachstum von *Ganoderma boninense* wie folgt inhibiert:
Durchschnitts EC₅₀-Werte der Wirkstoffe aus der Triazolgruppe:

| **nach 6 Tagen:** | **Hohe Myzel-Dichte** | **Geringe Myzel-Dichte** |
|---|---|---|
| Tebuconazole | 0,006 | 0,006 |
| Prothioconazole: | 0,008 | 0,012 |
| Fluquinconazole | 0,034 | 0,023 |
| Triadimenol | 0,052 | 0,093 |
| Bitertanol | 0,062 | 0,061 |

| **Nach 13 Tagen:** | **Hohe Myzel-Dichte** | **Geringe Myzel-Dichte** |
|---|---|---|
| Tebuconazole | 0,011 | 0,007 |
| Prothioconazole: | 0.009 | 0,014 |
| Fluquinconazole | 0,041 | 0,066 |
| Triadimenol | 0,060 | 0,098 |
| Bitertanol | 0,054 | 0,121 |

Die Verbindungen aus der Triazol-Gruppe zeigen eine exzellente Wirksamkeit bei der Kontrolle der Basal Stem Rot (BSR)-Krankheit. Tebuconazol und Prothioconazol erreichten die beste Wirksamkeit, während die Wirksamkeit von Fluquinconazol etwas darunter lag.

Trotzdem erwies sich Fluquinconazol als etwas wirksamer als Triadimenol. Im Allgemeinen erreichten Triadimenol und Bitertanol eine vergleichbar effiziente Kontrolle.

Durchschnitts EC₅₀-Wert der **fungiziden Wirkstoffe aus der Gruppe der Strobilurine:**

| **Nach 6 Tagen:** | **Hohe Myzel-Dichte** | **Geringe Myzel-Dichte** |
|---|---|---|
| Trifloxystrobin: | 0,006 | 0,006 |
| Fluoxastrobin: | | 0,036 |

| **Nach 13 Tagen** | **Hohe Myzel-Dichte** | **Gerigne Myzel-Dichte** |
|---|---|---|
| Trifloxystrobin: | 0,010 | 0,020 |
| Fluoxastrobin: | | 0,158 |

Trifloxystrobin zeigt eine hervorragende Wirksamkeit bei der Kontrolle der BSR-Krankeit. Fluoxastrobin erweist sich als weniger wirksam, wobei die Kontrolle durch Fluoxastrobin vegleichbar hoch wirksam ist wie durch das Triadimenol.

Durchschnitts EC₅₀-Wert der fungiziden Wirkstoffe aus der Succinat Dehydrogenase Inhibitoren-Gruppe:

| **nach 6 Tagen:** | **Hohe Myzel-Dichte** | **Geringe Myzel-Dichte** |
|---|---|---|
| Penflufen | 0,008 | 0,006 |
| Bixafen | 0,07 | 0,027 |

| **nach 13 Tagen** | **Hohe Myzel-Dichte** | **Geringe Myzel-Dichte** |
|---|---|---|
| Penflufen | 0,022 | 0,015 |
| Bixafen | 0,096 | 0,096 |

Die anhängenden Daten verdeutlichen die detaillierte Wirksamkeit der verschiedenen Fungizide (Dosis-Wirkung der EC₅₀ -Werte [mg/l] und Dokumentation des Wachstums von *Ganoderma boninense* in Mikrotiterplatten)

## Patentansprüche

1. Verwendung von einer oder mehreren fungiziden Verbindungen, ausgewählt aus der Gruppe, bestehend aus Succinat Dehydrogenase Inhibitoren, Triazolen, Strobilurinen und Mischungen davon zur Kontrolle von Mykosen der Abteilung Basidiomycetes von Palmengewächsen.

2. Verwendung nach Anspruch 1, wobei der mindestens eine fungizide Wirkstoff ein Succinat Dehydrogenase Inhibitor ist, der ausgewählt ist aus der Gruppe bestehend aus Fluopyram, Isopyrazam, Boscalid, Penthiopyrad, Penflufen, Sedaxan, Fluxapyroxad, Bixafen und 3-Difluormethyl-1-methyl-1H-pyrazol-4-carbonsäure[2-(2,4-dichlorophenyl)-2-methoxy-1-methyl-ethyl]-amid.

3. Verwendung nach Anspruch 1, wobei der mindestens eine fungizide Wirkstoff aus der Gruppe der Triazole ausgewählt wird und insbesondere Bitertanol, Fluquinconazol, Prothioconazole und/oder Tebuconazol ist.

4. Verwendung nach Anspruch 1, wobei der mindestens eine fungizide Wirkstoff aus der Gruppe der Strobilurine ausgewählt wird und insbesondere Fluoxastrobin und/oder Trifloxystrobin ist.

5. Verwendung nach einem der Ansprüche 1 bis 4, **dadurch gekennzeichnet, dass** der fungizide Wirkstoff ausgewählt wird aus der Gruppe, bestehend aus Tebuconazole, Prothioconazole, Bitertanol, Fluquinconazol, Penflufen, Fluoxastrobin und Trifloxystrobin.

6. Verwendung nach einem der Ansprüche 1 bis 5 zur Kontrolle von Ganodermataceae.

7. Verwendung nach einem der Ansprüche 1 bis 6 zur Kontrolle von Ganodermataceae auf Palmengewäschen der Unterfamilie Arecaceae, insbesondere Elaeidinae (Ölpalme).

8. Verwendung nach Anspruch 1 bis 7 in der Form einer insbesondere des Subtribus, mindestens einen der fungiziden Wirkstoff enthaltenden Zusammensetzung.

9. Verfahren zur Kontrolle von Mykosen der Abteilung Basidiomycetes von Palmengewächsen, **dadurch gekennzeichnet, dass** einer oder mehrere fungizide Wirkstoffe gemäß den Ansprüchen 1 bis 4 an den Palmengewächsen angewendet wird.

10. Verfahren nach Anspruch 9, **dadurch gekennzeichnet, dass** die Kontrolle von Mykosen präventiv und/oder therapeutisch erfolgen kann.

11. Verfahren nach Anspruch 9 und 10, **dadurch gekennzeichnet, dass** der mindestens eine fungizide Wirkstoff auf Palmengewächse, ihre oberirdischen und/oder unterirdischen Bestandteile, deren Lebensraum und/oder Lagerraum und/oder Erntegut ausgebracht wird.
